# EUROPÄISCHE PATENTANMELDUNG

(11) **EP 0 933 195 A1**
(43) Veröffentlichungstag der Anmeldung: **04.08.1999**
(21) Anmeldenummer: 97122234.4
(22) Anmeldetag: 17.12.1997
(51) Int. Cl.: B32B 5/26

(54) **Faserverstärktes Kunststoffbauteil**

(71) Anmelder: Freistaat Bayern, vertreten durch Friedrich-Alexander-Universität Erlangen-Nürnberg, 91052 Erlangen (DE)
(72) Erfinder: Drummer, Dietmar, 91369 Wiesenthau (DE); Wolfrum, Johannes, 91093 Untermembach (DE)
(74) Vertreter: Gassner, Wolfgang, Dr.-Ing.

(57) **Zusammenfassung**

Die Erfindung betrifft ein faserverstärktes Kunststoffbauteil mit einer aus einem ersten Kunstharz 5 hergestellten Deckschicht 4 und einer Tragschicht 11, die aus einem zweiten Kunstharz 9 mit darin aufgenommenen in der jeweiligen Tangentialebene des Kunststoffbauteils regelmäßig orientierten Fasern 3 gebildet ist. Zur Verbesserung der Oberflächenqualität des Kunststoffbauteils ist erfindungsgemäß vorgesehen, daß zwischen der Deck- 4 und der Tragschicht 11 mindestens eine Kompensationsschicht 8, 12 zur Kompensation von an der Oberfläche der Deckschicht 4 auftretenden sichtbaren regelmäßigen Oberflächenstrukturen 7 eingeschaltet ist.

## Beschreibung

Die Erfindung betrifft ein faserverstärktes Kunststoffbauteil nach dem Oberbegriff des Anspruchs 1.

Nach dem Stand der Technik sind sogenannte Sheet-Moulding-Compounds (SMC) bekannt. Dabei handelt es sich um flächenförmige faserverstärkte Halbzeuge. Diese bestehen im wesentlichen aus 1/3 Fasern, 1/3 Matrixharz sowie 1/3 Füllstoffe. Als Fasern können gängige Fasern, wie Glasfasern, Kohlenstoffasern und dgl. eingesetzt werden. Als Matrixharz verwendet man üblicherweise ungesättigte Polyesterharze. Als Füllstoff wird vorwiegend Kreide verwendet. Die aus SMC-Halbzeugen hergestellten Kunststoffbauteile schöpfen jedoch nicht das Festigkeitspotential aus, welches mit faserverstärkten Kunststoffen erzielbar ist. Das liegt u.a. daran, daß die Fasern nicht orientiert sind.

Eine wesentlich verbesserte Festigkeit weisen gattungsgemäße faserverstärkte Kunststoffbauteile auf, bei denen die quasi endlosen Fasern der Tragschicht, vorzugsweise in Kraftflußrichtung, in der Tangentialebene des Kunststoffbauteils orientiert sind. Zum Aufbau der Tragschicht werden hier zweckmäßigerweise Fasergewebe benutzt. Darauf kann eine aus einem schnellhärtenden Kunstharz hergestellte Deckschicht, eine sogenannte Gel-Coat-Schicht, aufgebracht sein. Die Deckschicht bildet die später zu lackierende Oberfläche des Kunststoffbauteils.

Die gattungsgemäßen Kunststoffbauteile haben allerdings den Nachteil, daß deren Oberfläche bei Einwirkung von Umgebungsbedingungen, wie Temperatur und Luftfeuchtigkeit, eine für das Auge wahrnehmbare regelmäßige Oberflächenstruktur ausbildet. Die Ausbildung der Oberflächenstruktur ist durch die unterschiedlichen Temperaturausdehnungs- und Quellkoeffizienten der Faser und des Kunstharzes bedingt.

Die Oberfläche weist insbesondere nicht die von der Automobilindustrie geforderte "Class-A" Güte auf. Unter "Class-A" Güte wird aus lackiertechnischer Sicht eine mit herkömmlichen Blechkarosserieteilen vergleichbare Oberflächengüte verstanden.

Aufgabe der vorliegenden Erfindung ist es, die Nachteile nach dem Stand der Technik zu beseitigen. Insbesondere soll ein leichtgewichtiges Kunststoffbauteil hoher Festigkeit bereitgestellt werden, das eine verbesserte Oberflächengüte aufweist. Diese Aufgabe wird durch die Merkmale des Anspruchs 1 gelöst.

Zweckmäßige Ausgestaltungen der Erfindung ergeben sich aus den Merkmalen der Ansprüche 2 bis 16.

Nach Maßgabe der Erfindung ist vorgesehen, daß zwischen der Deck- und der Tragschicht mindestens eine Kompensationsschicht zur Kompensation von an der Oberfläche der Deckschicht auftretenden sichtbaren regelmäßigen Oberflächenstrukturen eingeschaltet ist. Die damit geschaffene Oberfläche des Kunststoffbauteils ist in ihrer Qualität gleichbleibend und unabhängig von den Umgebungsbedingungen. Sie weist insbesondere die von der Automobilindustrie geforderte "Class-A" Güte auf.

Vorteilhafterweise ist eine erste Kompensationsschicht aus dem zweiten Kunstharz mit regellos darin aufgenommenen Fasern gebildet. Eine solche Schicht bewirkt eine besonders gute Kompensation von an der Kontaktfläche der Tragschicht durch Umgebungsbedingungen sich ausbildende Strukturen. Es hat sich gezeigt, daß die Oberflachenqualität des Kunststoffbauteils weiter verbessert werden kann, indem eine Mehrzahl an ersten Kompensationsschichten zwischen die Deck- und die Tragschicht eingeschaltet wird. Besonders vorteilhaft ist es, zwischen zwei erste Kompensationsschichten eine zweite Kompensationsschicht einzuschalten, bei der darin enthaltene Fasern in der jeweiligen Tangentialebene des Kunststoffbauteils regelmäßig orientiert sind.

Nach einem weiteren Ausgestaltungsmerkmal weisen die Fasern in der Tangentialebene mindestens eine, vorzugsweise zwei Vorzugsrichtungen, auf. Eine solche vorzugsweise Faserausrichtung kann beispielsweise durch die Verarbeitung von Fasergeweben erreicht werden. In der Tragschicht kann zur Erzielung der Tragfunktion ein Mehrfaches an Vorzugsrichtungen ausgebildet sein als in der zweiten Kompensationsschicht.

Das Flächengewicht einer in der zweiten Kompensationsschicht verwendeten ersten regelmäßig ausgebildeten Faserstruktur ist vorzugsweise geringer als das Flächengewicht einer in der Tragschicht verwendeten zweiten regelmäßig ausgebildeten Faserstruktur. Die erste regelmäßig ausgebildete Faserstruktur ist zweckmäßigerweise kann aus einem Fasergewebe oder -gelege mit einem Flächengewicht von 50 - 3000 g/m² gebildet. Die zweite regelmäßig ausgebildete Faserstruktur aus einem/r Fasergelege, -matte oder -gewebe mit einem Flächengewicht von 18 - 400 g/m² gebildet sein.

Es hat sich als besonders vorteilhaft erwiesen, dem ersten Kunstharz einen Anteil, vorzugsweise von bis zu 80 Vol.%, an Füllstoffen zuzusetzen. Als besonders vorteilhaft hat sich ein Füllstoffgehalt von 65 - -70 Vol.% erwiesen. Dadurch wird eine weitere Verbesserung der Resistenz des Kunststoffbauteils gegenüber den Umgebungsbedingungen erzielt. Dem zweiten Kunstharz kann ein Anteil, vorzugsweise von bis zu 50 Vol.%, an Füllstoffen zugesetzt sein. Das bewirkt insbesondere eine Angleichung der Temperaturausdehnungs- und Quellkoeffizienten von Faser und zweitem Kunstharz. Die durch Temperatur- und Feuchtigkeitsänderungen bewirkten Oberflächenstrukturen an der Oberfläche der Deckschicht werden dadurch weiter verkleinert.

Die Füllstoffe können aus der folgenden Gruppe ausgewählt sein: Aluminiumhydroxid, Calziumcarbonat, Glasmehl, Glaskugeln, Aluminium, Glashohlkugeln und dgl.. Die zum Aufbau des Kunststoffbauteils verwendeten Fasern können aus der folgenden Gruppe ausgewählt sein: Glasfasern, Kohlenstoffasern, Aramidfasern, Mineralfasern und dgl..

Nach einer bevorzugten Ausgestaltung ist die Topfzeit des ersten Kunstharzes kürzer als die des zweiten Kunstharzes. Zweckmäßigerweise weist das erste Kunstharz eine Topfzeit von 15 Minuten bis 2 Stunden, vorzugsweise von 20 Minuten, auf. Das zweite Kunstharz kann eine Topfzeit von 30 Minuten bis 24 Stunden, vorzugsweise von 2 Stunden, aufweisen. Als Harze können Epoxidharze, ungesättigte Polyesterharze oder Vinylesterharze verwendet werden. Der Deckschicht kann mit einem Lack überzogen sein.

Nachfolgend werden vorteilhafte Ausgestaltungen der Erfindung anhand der Zeichnung näher erläutert. Hierin zeigen
- Fig. 1a: eine schematische perspektivische Darstellung einer Gewebestruktur,
- Fig. 1b: eine schematische perspektivische Darstellung einer Deckschicht,
- Fig. 1c: eine schematische perspektivische Darstellung der Deckschicht bei Einwirkung von Temperatur und Feuchte,
- Fig. 2: eine schematische perspektivische Darstellung des Schichtaufbaus eines ersten faserverstärkten Kunststoffbauteils,
- Fig. 3: eine schematische perspektivische Darstellung des Schichtaufbaus eines zweiten faserverstärkten Kunststoffbauteils und
- Fig. 4: eine schematische perspektivische Darstellung des Schichtaufbaus eines dritten faserverstärkten Kunststoffbauteils.

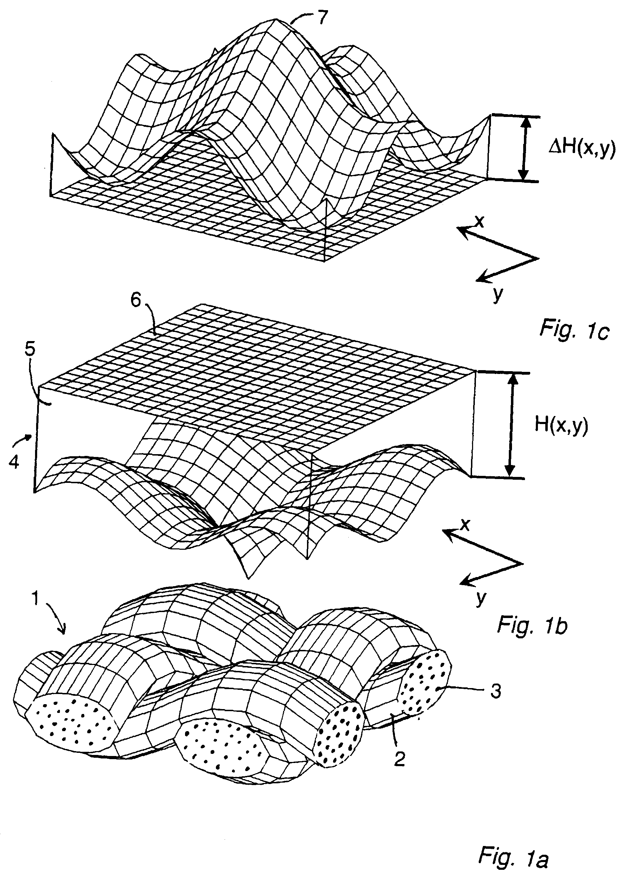

In Fig. 1a - c ist der Aufbau eines Kunststoffbauteils nach dem Stand der Technik gezeigt. Ein aus Glasfaserrovings 1 hergestelltes Glasfasergewebe 2 besteht aus einer Vielzahl von Glasfasern 3. Die Glasfaserrovings 1 bzw. die Glasfasern 3 sind in der xy-Ebene in den Vorzugsrichtungen x und y angeordnet. Die xy-Ebene entspricht der Tangentialebene des jeweils betrachteten Flächenelements des faserverstärkten Kunststoffbauteils.

Fig. 1b zeigt in schematischer perspektivischer Ansicht eine Deckschicht 4. Die Deckschicht 4 weist eine unterschiedliche Dicke H auf. Sie kann aus einem ersten schnellhärtenden Kunstharz 5 hergestellt sein. Eine Oberseite 6 der Deckschicht 4 ist eben. Dieser Zustand ist unmittelbar nach der Herstellung des faserverstärkten Kunststoffbauteils realisiert.

Fig. 1c zeigt die Oberseite 6 unter dem Einfluß von Temperatur und Feuchte. Aufgrund der unterschiedlichen Temperaturausdehnungs- und Quellkoeffizienten von Kunstharz und Glasfaser bilden sich an den Stellen, wo die ersten Deckschicht 4 besonders dick ausgebildet ist, starke Unebenheiten 7 bzw. Oberflächenstrukturen aus. Die Unebenheiten 7 bewirken eine unebene Lackoberfläche (hier nicht gezeigt).

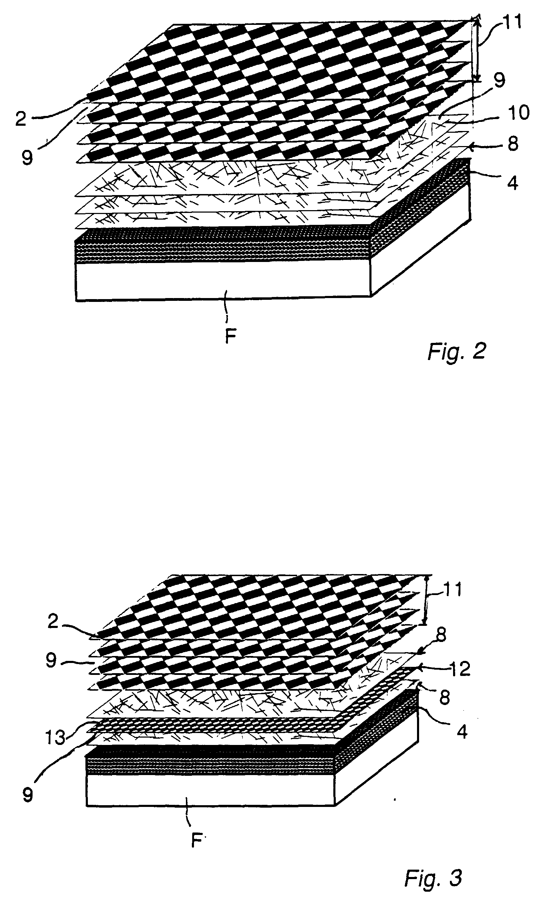

Fig. 2 zeigt in schematischer perspektivischer Ansicht den Schichtaufbau eines ersten faserverstärkten Kunststoffbauteils. Mit F ist eine Form bezeichnet. Das Kunststoffbauteil besteht aus einer Deckschicht 4 und drei ersten Kompensationsschichten 8. Die ersten Kompensationsschichten 8 sind aus einem zweiten Kunstharz 9 hergestellt, in dem in regelloser Anordnung, vorzugsweise in statistischer Verteilung in x- und y-Richtung der Tangentialebene, etwa 25 mm lange Glasfaserabschnitte 10 aufgenommen sind. Auf den ersten Kompensationsschichten 8 ist die Tragschicht 11 aufgebracht. Sie besteht aus mehreren Glasfasergewebelagen 2, die durch das zweite Kunstharz 9 gebunden sind. Die Glasfasern 3 bzw. die Glasfaserrovings 2 sind in der Tragschicht 11 in der x- und y-Richtung der Tragschichtebene orientiert. Sie erstrecken sich vorzugsweise über die gesamte Länge bzw. Breite der Tragschichtebene. Die Tragschichtebene entspricht hier der Tangentialebene.

Fig. 3 zeigt ein drittes faserverstärktes Kunststoffbauteil. Hier ist zwischen zwei ersten Kompensationsschichten 8 eine zweite Kompensationsschicht 12 eingeschaltet. Die zweite Kompensationsschicht 12 ist aus einem feinen Glasfasergewebe 13 hergestellt, welches im zweiten Kunstharz 9 aufgenommen ist. Im feinen Glasfasergewebe 13 sind die Glasfasern 3 bzw. die Glasfaserrovings in x- und y-Richtung der Tangentialebene orientiert.

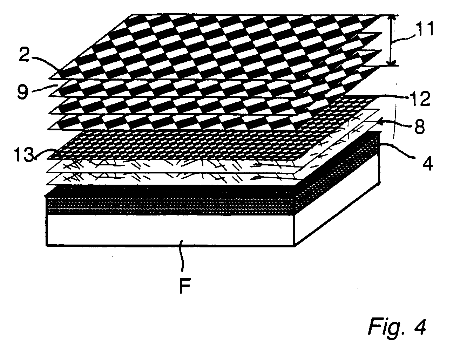

In Fig. 4 ist schematisch der Schichtaufbau eines dritten Kunststoffbauteils gezeigt. Dabei sind auf der Deckschicht 4 zwei erste Kompensationsschichten 8 aufgebracht. Darauf ist eine zweite Kompensationsschicht 12 und auf dieser die Tragschicht 11 aufgebracht.

Zur Herstellung der ersten Kompensationsschicht 8 können auch Glasfaservliese verwendet werden. Es werden Glasfaservliese oder feine Glasfasergewebe mit einem Flächengewicht von 18 bis 300 g/m² bevorzugt.

Die Kompensationsschichten 8 und 12 weisen bevorzugterweise eine Gesamtdicke von höchstens 1 mm auf. Die darauf aufgebrachte Deckschicht weist eine Dicke von höchstens 1,5 mm auf. Die Tragschicht 11 weist üblicherweise eine Dicke von bis zu 10 mm auf.

### Bezugszeichenliste

- 1: Glasfasergewebe
- 2: Glasfaserroving
- 3: Glasfaser
- 4: Deckschicht
- 5: erstes Kunstharz
- 6: Oberseite
- 7: Unebenheit
- 8: erste Kompensationsschicht
- 9: zweites Kunstharz
- 10: Glasfaserabschnitte
- 11: Tragschicht
- 12: zweite Kompensationsschicht
- 13: feines Glasfasergewebe
- x,y: Vorzugsrichtungen
- H: Dicke
- F: Form

## Patentansprüche

1. Faserverstärktes Kunststoffbauteil mit einer aus einem ersten Kunstharz (5) hergestellten Deckschicht (4) und einer Tragschicht (11), die aus einem zweiten Kunstharz (9) mit darin aufgenommenen in der jeweiligen Tangentialebene des Kunststoffbauteils regelmäßig orientierten Fasern (3) gebildet ist, **dadurch gekennzeichnet**, daß zwischen der Deck- (4) und der Tragschicht (11) mindestens eine Kompensationsschicht (8, 12) zur Kompensation von an der Oberfläche der Deckschicht (4) auftretenden sichtbaren regelmäßigen Oberflächenstrukturen (7) eingeschaltet ist.

2. Faserverstärktes Kunststoffbauteil nach Anspruch 1, wobei eine erste Kompensationschicht (8) aus dem zweiten Kunstharz (9) mit regellos darin aufgenommenen Fasern (10) gebildet ist.

3. Faserverstärktes Kunststoffbauteil nach einem der vorhergehenden Ansprüche, wobei eine Mehrzahl an ersten Kompensationsschichten (8) zwischen die Deck- (4) und die Tragschicht (11) eingeschaltet ist.

4. Faserverstärktes Kunststoffbauteil nach einem der vorhergehenden Ansprüche, wobei zwischen zwei erste Kompensationschichten (8) eine zweite Kompensationsschicht (12) eingeschaltet ist, bei der darin enthaltene Fasern (3) in der jeweiligen Tangentialebene des Kunststoffbauteils regelmäßig orientiert sind.

5. Faserverstärktes Kunststoffbauteil nach einem der vorhergehenden Ansprüche, wobei die Fasern (3) in der Tangentialebene mindestens eine, vorzugsweise zwei, Vorzugsrichtungen (x, y) aufweisen.

6. Faserverstärktes Kunststoffbauteil nach einem der vorhergehenden Ansprüche, wobei das Flächengewicht einer in der zweiten Kompensationsschicht (12) verwendeten ersten regelmäßig ausgebildeten Faserstruktur (13) geringer ist als das Flächengewicht einer in der Tragschicht (11) verwendeten zweiten regelmäßig ausgebildeten Faserstruktur (2).

7. Faserverstärktes Kunststoffbauteil nach einem der vorhergehenden Ansprüche, wobei die erste regelmäßige Faserstruktur aus einem Fasergewebe (2) oder -gelege mit einem Flächengewicht von 50 - 3000 g/m² gebildet ist.

8. Faserverstärktes Kunststoffbauteil nach einem der vorhergehenden Ansprüche, wobei die zweite regelmäßige Faserstruktur (12) aus einem/r Fasergelege, -matte oder -gewebe (13) mit einem Flächengewicht von 18 - 400 g/m² gebildet ist.

9. Faserverstärktes Kunststoffbauteil nach einem der vorhergehenden Ansprüche, wobei dem ersten Kunstharz (5) ein Anteil, vorzugsweise von bis zu 80 Vol.%, an Füllstoffen zugesetzt ist.

10. Faserverstärktes Kunststoffbauteil nach einem der vorhergehenden Ansprüche, wobei dem zweiten Kunstharz (9) ein Anteil, vorzugsweise von bis zu 50 Vol.%, an Füllstoffen zugesetzt ist.

11. Faserverstärktes Kunststoffbauteil nach einem der vorhergehenden Ansprüche, wobei die Füllstoffe aus der folgenden Gruppe ausgewählt sind: Aluminiumhydroxid, Calziumcarbonat, Glasmehl, Aluminium, Glaskugeln, Glashohlkugeln oder dgl..

12. Faserverstärktes Kunststoffbauteil nach einem der vorhergehenden Ansprüche, wobei die Fasern (3) aus der folgenden Gruppe ausgewählt sind: Glasfasern, Kohlenstoffasern, Aramidfasern, Mineralfasern oder dgl..

13. Faserverstärktes Kunststoffbauteil nach einem der vorhergehenden Ansprüche, wobei die Topfzeit des ersten Kunstharzes (5) kürzer als die des zweiten Kunstharzes (9) ist.

14. Faserverstärktes Kunststoffbauteil nach einem der vorhergehenden Ansprüche, wobei das erste Kunstharz (5) eine Topfzeit von 15 Minuten bis 2 Stunden, vorzugsweise von 20 Minuten, aufweist.

15. Faserverstärktes Kunststoffbauteil nach einem der vorhergehenden Ansprüche, wobei das zweite Kunstharz (9) eine Topfzeit von 30 Minuten bis 24 Stunden aufweist.

16. Faserverstärktes Kunststoffbauteil nach einem der vorhergehenden Ansprüche, wobei die Außenseite der Deckschicht (4) mit einem Lack überzogen ist.
